# EUROPEAN PATENT APPLICATION

(11) **EP 4 353 059 A1**
(43) Date of publication of application: **17.04.2024**
(21) Application number: 23202676.5
(22) Date of filing: 10.10.2023
(51) Int. Cl.: A01B 33/02, A01B 33/08

(54) **FARMING MACHINE FOR WORKING THE GROUND**

(30) Priority: 11.10.2022 IT 202200020967
(71) Applicant: Valentini Antonio S.r.l., 35012 Camposampiero (PD) (IT)
(72) Inventor: VALENTINI, Antonio, 35012 Camposampiero (PD) (IT)
(74) Representative: Caldon, Giuliano

(57) **Abstract**

Farming machine for working the ground, which comprises a support structure (2), arranged for advancing on the ground along an advancement direction (X) and comprising a support frame (20) and an upper casing (21), mounted on the support frame (20) and on the lower part delimiting an operative seat (200). The farming machine (1) also comprises at least one tool-holder rotor (3), which is rotatably mounted on the support frame (20) around a rotation axis (Y) intended to be substantially orthogonal to the advancement direction (X), is placed below the upper casing (20) in the operative seat (200), and is actuatable to rotate around the first rotation axis (Y) in order to turn over the ground.

The upper casing (21) is movably mounted on the support frame (20), and the farming machine (1) comprises movement means (4), mechanically connected to the upper casing (21) and to the support frame (20) and actuatable for moving the upper casing (21) at least between a first position (A), in which the upper casing (21) is spaced from the tool-holder rotor (3), and a second position (B), in which the upper casing (21) is brought close to the tool-holder rotor (3).

## Description

### Field of application

The present invention refers to a farming machine for working the ground according to the preamble of the independent claim 1.

The present farming machine is intended to be used, on its own or in association with other units, so as to attain different ground working operations, such as for example operations of rotary cultivation, burying, bed-forming etc. Therefore, the present farming machine can advantageously but not exclusively be for example a rotary cultivator, burier or bed-forming machine.

The farming machine, object of the present invention, is therefore intended to be used in the farming field, preferably in order to attain a preliminary preliminary preparation work of the ground, for example in order to turn over and/or excavate the ground so as to allow subsequent agricultural and/or horticultural operations. The invention is therefore situated in the industrial field of construction of farming machines for working the ground, and in particular for executing preliminary preparation work of the ground.

### State of the art

Known for some time on the market are farming machines which are adapted to carry out working of the ground while they advance thereon.

Known for example are the rotary cultivators, which allow rotary cultivation of the ground in order to break it and turn it over in view of the subsequent operations of cultivation of the agricultural or horticultural terrain. Also known are burier machines, which allow rotary cultivation of the ground and simultaneously burying possible large-size detritus, such as for example stones and rocks present in the ground, in order to ensure the presence of a ground surface layer, substantially lacking detritus.

Also known are bed-forming machines, which allow rotary cultivation of the ground and subsequently compact it with suitable forming elements, placed behind the rotary cultivator, which are adapted to compact the ground, forming beds, usually of trapezoidal form, on which the seeds, or directly the plants to be cultivated, are planted.

One example of such farming machines of known type is described in the patent application US 2022/046845 A1, which describes a farming machine that comprises a support structure, which is provided with a front opening and an opposite rear opening, in order to respectively allow the entrance of the ground to be worked and the outflow of the worked ground. In particular, the support structure is mechanically connectable to a tractor in order to be towed by the latter on the ground during working.

The support structure of the aforesaid farming machine of known type comprises a support frame and an upper casing, also known as hood, which is fixed to the support frame and delimits an operative seat within which a tool-holder rotor is positioned. For such purpose, the tool-holder rotor carries, mounted thereon, one or more work tools, such as for example rotary cultivators, hoes, blade or knives. In particular, the rotary cultivator is rotatably mounted on the support frame of the support structure and is actuatable in rotation while the farming machine advances in order to carry out a rotary cultivation working on the ground, whose type (e.g. the sizing of the worked ground) and depth vary based on the type of rotary cultivator, or other tool, mounted on the support structure.

In particular, the tool-holder rotor delimits with the upper casing, within the aforesaid operative seat, a passage volume which is placed above the tool-holder rotor and is intended to be traversed by the worked ground.

More in detail, the rotary cultivator is actuated to rotate in opposite sense with respect to the rotation sense of the wheels of the farming machine or of the tractor to which this is connected, and is configured for excavating the ground that is situated to the front thereof and bring it, through the passage volume, towards the rear opening of the support structure, behind the same tool-holder rotor.

The farming machines of conventional type described briefly above nevertheless have several drawbacks.

The main drawback lies in the fact that such machines have proven unsuitable for carry out working on difficult terrain, such as in particular wet terrain and/or terrain with large-size detritus.

Indeed, in such cases, the ground that is excavated by the rotary cultivator and conveyed within the passage volume determines an accumulation of the worked ground, which usually is attached on the lower face of the upper casing.

The aforesaid ground accumulation first of all determines a greater force by the rotary cultivator since it obstructs the normal rotation of the latter (or even in some cases a block of the tool-holder rotor) which can cause the quick wear or even breakage of the rotary cultivator or of the mechanical components associated therewith, as well as determines a substantial increase of the consumptions of the machine due to the greater torque that the motor of the latter must provide in order to rotate the tool-holder rotor.

In addition, the aforesaid ground accumulation ensures that the rotary cultivation work is often incomplete and imprecise during the working of difficult terrain, and in particular in the case of wet terrain.

A further drawback lies in the fact that such farming machines of known type has in fact shown to be poorly adaptable if it is desired to change the sizing (intended as grain size) of the worked ground, e.g. depending on the type of ground to be worked or on the final objective that one wishes to achieve.

The farming machines of known type in fact allow modifying the sizing of the worked ground, even if in a not entirely efficient manner, substituting the work tools mounted on the tool-holder rotor, e.g. in order to vary the type and/or dimensions thereof.

Of course, such operation for substituting the work tools is extremely inconvenient and costly for the user to carry out, especially if it is desired to change the sizing for a reduced ground plot in order to then return to the original sizing, and determines an increase in terms of costs and time for the final user.

A further drawback of the farming machines of known type lies in the fact that they have proven to be extremely complicated to manage during the maintenance thereof, both extraordinary and ordinary maintenance.

The maintenance of the aforesaid machines, rendered for example necessary by jamming of the rotor due to working on wet terrain, however requires the user to operate below the support structure in order to reach the upper casing and remove the ground detritus attached thereto.

In several cases, it is possible to operate without removing the tool-holder rotor or work tools mounted thereon, with consequent limitations of the movements and with poor results in terms of machine maintenance and cleaning. In other cases, it is instead necessary to remove the tool-holder rotor or the tools mounted thereon in order to execute a more complete and precise maintenance. Nevertheless, even such operation of removal of the rotor or of the work tools is extremely costly to carry out for the user and determines an increase in terms of costs and time for the final user.

### Presentation of the invention

In this situation the problem underlying the present invention is therefore that of eliminating the problems of the abovementioned prior art, by providing a farming machine for working the ground, which allows reducing or eliminating the accumulation of earth that is formed between the tool-holder rotor and the upper casing during the ground working operations.

Another object of the present invention is to provide a farming machine, which allows increasing the workability of difficult terrain, in particular wet terrain and/or terrain with numerous detritus.

Another object of the present invention is to provide a farming machine, which allows reducing the energy consumptions during the working of the terrain. Another object of the present invention is to provide a farming machine, which allows reducing the forces that the tool-holder rotor must sustain during the processing, increasing the lifetime of the same tool-holder rotor.

Another object of the present invention is to provide a farming machine, which allows modifying the sizing of the worked ground in an easy and precise manner. Another object of the present invention is to provide a farming machine, which allows simplifying and facilitating the maintenance operations, both ordinary and extraordinary.

Another object of the present invention is to provide a farming machine, which is simple and inexpensive to attain and entirely reliable in operation.

### Brief description of the drawings

The technical characteristics of the invention, according to the aforesaid objects, are clearly seen in the contents of the below-reported claims and the advantages thereof will be more evident in the following detailed description, made with reference to the enclosed drawings, which represent a merely exemplifying and non-limiting embodiment of the invention, in which:

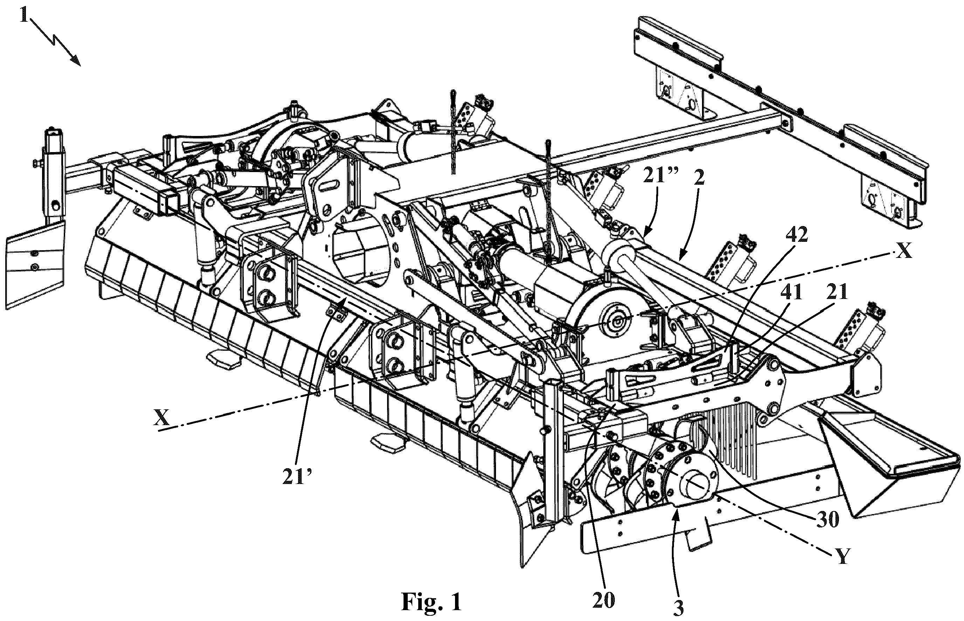

- figure 1 shows an overall perspective view of the farming machine according to the present invention;
- Figures 2A and 2B show an overall side view of the farming machine of figure 1, con an upper casing respectively in a first and in a second position, raised and lowered;
- figure 3 shows a detail of the farming machine of figure 2B, with the upper casing in lowered position;
- figure 4 shows a top view of a detail of the farming machine of figure 1, relative to movement means and motion transmission means;
- figure 5 shows a top perspective view of the detail of the excavator machine of figure 4;
- figure 6 shows a top perspective view of a detail of figure 5, relative to an actuator member and to the motion transmission means, with several details removed in order to better illustrate other details;
- figure 7 shows a front view of a further detail of figure 6, relative to the motion transmission means, with several elements transparent.

### Detailed description of a preferred embodiment

With reference to the enclosed drawings, reference number 1 overall indicates a farming machine for working the ground, according to the present invention.

The farming machine 1 in accordance with the present invention may be employed in order to carry out different ground working types, depending on the final result that one wishes to attain.

More in detail, the farming machine 1 is adapted to execute work, preferably for preparing the ground for subsequent cultivation operations, such as for example rotary cultivation, burying or bed-forming operations.

For example, in a non-limiting manner, the farming machine 1, object of the invention, can be a rotary cultivator, a burier machine or a bed-forming machine, as better described hereinbelow.

With the term "ground", it will be intended to indicate hereinbelow a generic substrate, of any composition and consistency, even if an agricultural terrain is preferably intended, and preferably a horticultural field, intended for cultivation.

In accordance with the invention the farming machine 1 comprises a support structure 2, preferably made of metallic material, which is arranged for advancing on the ground along an advancement direction X.

In particular, the farming machine 1 can be of towable type, in which therefore the support structure 2 is mechanically connectable to a drive unit, such as for example a tractor, in order to be towed by the latter along the ground. Advantageously, in a per se known manner, in the event in which the farming machine 1 is of towable type, the support structure 2 is preferably connected, in particular by means of a transmission, power takeoff of the drive unit.

Alternatively, the farming machine 1 can be of self-propelled type and comprising a drive unit integrated in order to allow an autonomous movement of the farming machine 1.

For the purpose of facilitating the movement of the farming machine 1 along the ground, the support structure 2 is advantageously provided with at least one pair of wheels, not represented in the enclosed figures, which are preferably placed on opposite sides of the support structure 2 and are intended to abut against the ground in order to allow the advancement of the farming machine 1.

The support structure 2 comprises a support frame 20, on which the transmission members are preferably mounted and are connectable to the power takeoff, and an upper casing 21 mounted on the support frame 20.

Advantageously, the upper casing 21, known in the technical jargon also as hood, is formed by a substantially plate-like body, preferably and substantially placed horizontally, which is provided with a lower face, directed downward (in particular towards the ground), and an opposite upper face directed upward.

The upper casing 21 delimits an operative seat 200 which, in particular, is extended between a front opening 2' through which ground to be worked is susceptible of entering, and a rear opening 2" through which worked ground is susceptible of exiting. Advantageously, the support structure 2 is extended, along the advancement direction X, between the aforesaid front opening 2' and the aforesaid rear opening 2".

More in detail, the operative seat 200 is extended below the upper casing 21, which delimits such seat on the upper part, and is open on the lower part in order to face the ground on which the farming machine 1 is susceptible of advancing.

Advantageously, the support frame 20 is extended, according to the advancement direction X, between a front side, directed towards the front opening 2', and a rear side, directed towards the rear opening 2". Advantageously, the support frame 20 is provided with multiple metallic tubes 201, which are preferably placed perimetrically and above the upper casing 21, in order to mechanically stiffen the entire support structure 2. In particular, the support frame 20 comprises at least one front tube 201' and one rear tube 201", preferably placed parallel to each other. Advantageously, the support frame 20 comprises two lateral walls 22, which are extended projectingly on the lower part from the latter, towards the ground, and are each preferably fixed to the front tube 201' and to the rear tube 201", on opposite sides of the latter.

Preferably, the two lateral walls 22 of the support frame 20 are placed as a lateral delimitation of the operative seat 200.

The farming machine 1 also comprises at least one tool-holder rotor 3, which is rotatably mounted on the support frame 21 around a first rotation axis Y, in particular horizontal, intended to be substantially orthogonal to the advancement direction X.

In particular, the tool-holder rotor 3 is rotatably mounted on the support frame 20 of the support structure 2 by means of known bearing means, not illustrated in the enclosed figures.

The tool-holder rotor 3 comprises multiple work tools 30 (in particular arranged removably or in a single body), such as for example rotary cultivators, hoes, blades, knives or other work tools susceptible of turning over the ground, per se of known type and hence not described in detail in this document.

For example, the tool-holder rotor comprises a mounting disc, which is placed coaxial with the first rotation axis, and carries the work tools 30 mounted thereon (such as for example rotary cultivator, blades, hoes, knives, etc.).

The tool-holder rotor 3 is placed below the upper casing 21, within the operative seat 200, in particular between the front opening 21 and the rear opening 22, and is actuatable to rotate around the first rotation axis Y in order to turn over the ground.

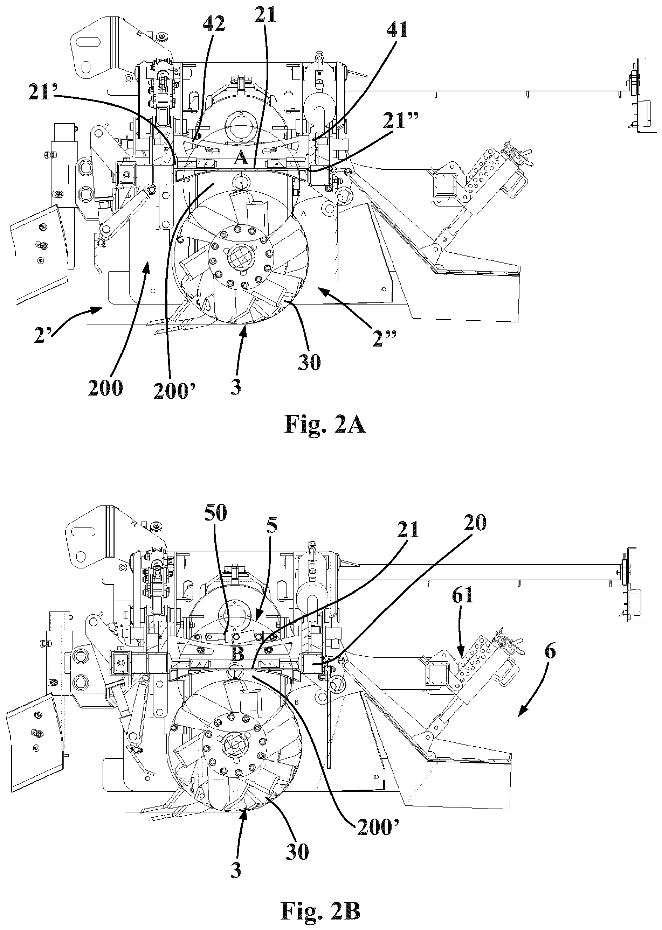

Advantageously, while the farming machine 1 advances on the ground, the tool-holder rotor 3 is actuatable to rotate around the first rotation axis Y, in particular in the sense opposite that of the wheels of the support structure 2 (clockwise in figure 2A) in order to break and lift the ground that it encounters along the advancement trajectory X.

In accordance with the idea underlying the present invention, the upper casing 21 is movably mounted on the support frame 20, and the farming machine 1 comprises movement means 4, mechanically connected to the upper casing 21 and to the support frame 20 and actuatable for moving the upper casing 21 at least between a first position A, in which the upper casing 21 is spaced from the tool-holder rotor 3, and a second position B, in which the upper casing 21 is brought close to the tool-holder rotor 3.

In this manner, with the arrangement of a movable upper casing 21, actuatable to move close to and away from the tool-holder rotor 3, it is possible to reduce the quantity of ground that is accumulated during the working between the upper casing 21 and the tool-holder rotor 3, and which in particular remains adhered to the same upper casing 21, allowing increasing the workability of difficult terrain (in particular wet) and also reducing the forces that the tool-holder rotor 3 must sustain during its operation.

For example, in wet terrain or terrain with large-size detritus, it is possible to place the upper casing 21 towards or in the first position in order to increase the distance between the latter and the tool-holder rotor 3 so as to prevent substantial quantities of ground from remaining attached to the upper casing 21 or large detritus from being stuck between the latter and the tool-holder rotor 3. In addition, the tool-holder rotor 3 encounters much lower resistance by the ground that passes above it, hence reducing the necessary torque to be applied to the tool-holder rotor 3 itself and, therefore, the energy consumptions of the farming machine.

Advantageously, the upper casing 21 is movable along a movement direction Z, between the first position A and the second position B, and it is stably positionable along the movement trajectory at least in the two aforesaid first and second positions A and B. Preferably, the upper casing 21 is also positionable (in particular in a continuous manner) also in one or more intermediate positions, placed between the first position A and the second position B.

The arrangement of one or more intermediate positions also allows positioning the upper casing 21 always at the desired distance from the tool-holder rotor 3, allowing adapting the farming machine 1 to different needs, e.g. sizing and/or moisture of the ground.

More in detail, with the term "stably" it is to be intended that when the upper casing 21 is in the first position A or in the second position B, or in any one of the possible intermediate positions, it is rigidly blocked with respect to the support frame 20 of the support structure 2 and prevented in its movement along the movement direction Z, until the movement means 4 once again intervene.

Advantageously, the tool-holder rotor 3 is provided with an upper section 3' directed towards the upper casing 21, and the latter is placed closer to the upper section 3' of the rotor 3 when it is situated in the second position B with respect to when it is situated in the second position A.

Advantageously, as set forth above, the upper casing 21 is also positionable in one or more intermediate positions placed between the first position A and the second position B, which are preferably placed closer to the upper section 3' of the rotor 3 as one progressively moves from the first position A to the second position B.

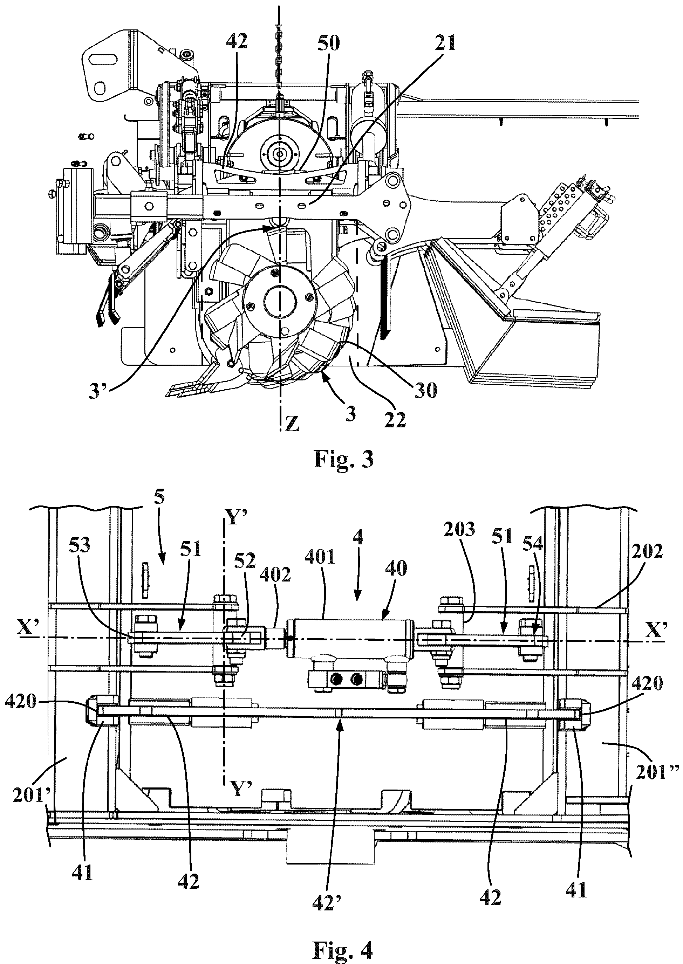

More in detail, as better illustrated in figure 3, the upper section 3' of the tool-holder rotor 3 is to be intended as the rotor section 3, preferably defined by a point, placed higher up, intended that such section varies during the rotation of the tool-holder rotor 3.

Advantageously, the tool-holder rotor 3 delimits in the operative seat 200, in particular with the upper casing 21, a passage volume 200', which is placed above the tool-holder rotor 3.

In operation, the tool-holder rotor 3 is adapted to excavate the ground that is situated in front of it and bring towards the rear opening 2", making it pass above the tool-holder rotor 3 itself (between the latter and the upper casing 21) through the aforesaid passage volume 200', in order to subsequently make it fall at a rear portion of the operative seat 200 placed to the rear of the same tool-holder rotor 3.

During the passage of the worked ground above the tool-holder rotor 3, part of such ground is susceptible of being accumulated in the passage volume 200', for example attaching to the lower face of the upper casing 21. As stated above, the arrangement of the upper casing 21 according to the invention allows reducing or even eliminating such undesired accumulation of terrain.

Advantageously, when the upper casing 21 is in the first position A, the passage volume 200' has greater dimensions with respect to when the upper casing 21 is in the second position B, in order to make it difficult to accumulate or prevent the quantity of ground that can be accumulated in the aforesaid passage volume 200'. Advantageously, the passage volume 200' is delimited on the lower part by the tool-holder rotor 3, and on the upper part by the upper casing 21, at least when the latter is in the second position B.

In accordance with the embodiment illustrated in the enclosed figures, the upper casing 21 delimits the passage volume 200' on the upper part, even when it is situated in the first position A, being able to reduce such passage volume 200' as one progressively moves from the first position A to the second position B.

In accordance with a different embodiment, the passage volume 200' is not delimited on the upper part by the upper casing 21 when the latter is situated in the first position A. Optionally, in this case, the farming machine 1 can comprise a protection band fixed to the support frame 20 above the upper casing 21 and adapted to define the passage volume 200' at the upper part when the upper casing 21 is in first position A, so as to limit the upper outflow of the ground turned over by the tool-holder rotor 3.

Preferably, the first position A coincides with a raised position of the upper casing 21, while the second position B coincides with a lowered position of the same upper casing 21.

Advantageously, in accordance with the preferred embodiment illustrated in the enclosed figures, the upper casing 21 is slidably mounted on the support frame 20 and is movable along the aforesaid movement direction Z, which is substantially orthogonal to the advancement direction X and to the first rotation axis Y (and preferably rectilinear).

Advantageously, in accordance with the aforesaid preferred embodiment, the movement means 4 comprise at least one slide guide 41, preferably C-shaped, which is fixed to the support frame 20 and is extended along the aforesaid movement direction Z. Advantageously, the movement means 4 also comprise at least one guide element 42, constrained to the upper casing 21 and slidably engaged in the slide guide 41 in order to guide the upper casing 21 during its movement between the first position A and the second position B along the movement direction Z. In particular, the guide element 42 is provided with a guide edge 420 which is arranged for slidably cooperating within the slide guide 41.

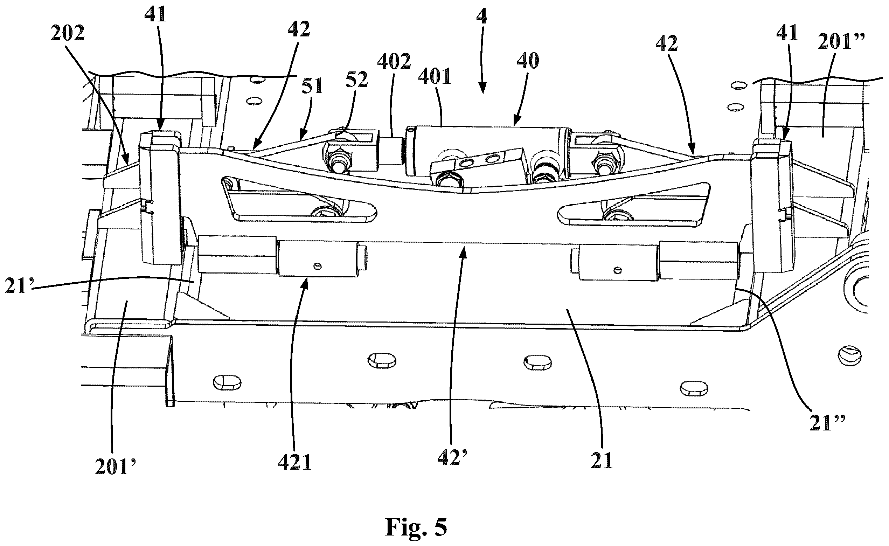

Advantageously, the slide guide 41 is extended, along the aforesaid movement direction Z, projecting above the support frame 20, and is preferably fixed to one of the tubes 201 which define the support frame 20, as is visible in figure 5. Of course, it is otherwise possible that the slide guide 41 be extended below with respect to the support frame 20.

Advantageously, the guide element 42 is mounted at the upper face of the upper casing 21 and is constrained (in particular rigidly) to the latter at least along the aforesaid movement direction Z.

Preferably, the guide element 42 has one or more degrees of freedom with respect to the upper casing 21 for movement different from the translation along the movement direction Z. In particular, as illustrated in the example of figure 5, the guide element 42 is preferably hinged to the upper casing 21 (e.g. by means of at least one hinge 421) around an axis substantially parallel to the advancement direction X, so as to allow possible movements, due for example to vibrations of the upper casing 21 during working, and reduce the risk of sticking and structural breakage of the guide element 42.

Advantageously, the upper casing 21 is extended, according to the advancement direction X, between two opposite sides 21', 21". More in detail, the upper casing 21 is extended between a first front side 21', directed towards the front side of the support frame 20, and a second side 21", rear, directed towards the rear side of the support frame 20. In particular, the front side of the support frame 20 is preferably defined by the front tube 201' while the rear side is defined by the rear tube 201" of the same support frame 20.

Advantageously, the movement means 4 comprising two slide guides 41, each placed at a corresponding side 21', 21" of the upper casing 21.

Preferably, the movement means 4 comprise a first slide guide 41 fixed to the front tube 201' of the support frame 20, and a second slide guide 41 fixed to the rear tube 201" of the same support frame 20. Advantageously, the movement means 4 also comprise two guide elements 42, preferably it too arranged at the opposite sides 21', 21" of the upper casing 21, and each of such two guide elements 42 is provided with a guide edge 420 which slidably engages a corresponding slide guide 41.

In this manner, it is possible to precisely and reliably guide the upper casing 21, during its movement along the movement direction Z, along the entire depth of the upper casing 21 (parallel to the advancement direction X).

Preferably, as visible in figure 5, the two guide elements 42 are made in a single body with each other and define a guide body 42' which is extended, along the advancement direction X, between two opposite guide edges 420, each of which slidably engages a corresponding slide guide 41.

Advantageously, in such case, the guide body 42' is hinged to the upper casing 21 at two separate hinging points, of which one is placed at the first side 21' of the upper casing 21, and one placed at the second side 21" of the latter.

Advantageously, as is visible in figure 5, the slide guides 41 do not project above the upper face of the upper casing 21, in particular being placed within the vertical bulk of the corresponding tubes 201 of the support frame 20.

In accordance with such positioning of the slide guides 41, the guide edge 420 of each guide element 42 is advantageously made as a lateral projection, along a direction parallel to the advancement direction X, and the guide element 42 is advantageously provided with a recess, made below the guide edge 420 and suitably sized for allowing the free movement of the guide element 42 with respect to the support frame 20.

In accordance with a different embodiment, not illustrated in the enclosed figures, the upper casing 21 is hinged to the support frame 20, along a rotation direction substantially parallel to the first rotation axis Y, and is movable around the aforesaid rotation direction between the first position A and the second position B. In such case, the support casing 21 advantageously comprises two separate portions, rotatably connected on opposite sides of the support frame 20 and hinged to each other, preferably at a middle line of the support casing 21 placed parallel to the first rotation axis Y, in order to allow moving the support casing 21 close to and away from the tool-holder rotor 3, in particular at the aforesaid middle line.

Advantageously, the movement means 4 comprise at least one actuator member 40, preferably of motorized type, actuatable for moving in controlled manner the upper casing 21 between the first position A and the second position B.

In accordance with the preferred embodiment, the actuator member 40 is arranged for determining an actuation motion oriented along an actuation direction X' which is transverse, and preferably substantially orthogonal, with respect to the movement direction Z. More in detail, in accordance with the aforesaid preferred embodiment, the actuation direction X' is substantially parallel to the advancement direction X of the farming machine 1, and of course it is possible, without departing from the protective scope of the present invention, to place the actuator member 40 in a manner such that its actuation direction X' is substantially parallel to the first rotation axis Y of the tool-holder rotor 3.

In accordance with the aforesaid preferred embodiment, the movement means 4 advantageously comprise at least one motion transmission kinematic mechanism 5, which is placed as a connection between the actuator member 40 and the upper casing 21 and is arranged for transforming the actuation motion (whether it is oriented parallel to the advancement direction X or to the first rotation axis Y) imparted by the same actuator member 40 into a linear motion parallel to the movement direction Z.

More in detail, the motion transmission kinematic mechanism 5 comprises at least one lever 51, which is pivoted to the support frame 20, is rotatable around a second rotation axis Y', and is provided with a first connection portion 52 mechanically connected to the actuator member 40 and with a second connection portion 53 mechanically connected to the upper casing 21.

Advantageously, the actuator member 40 is actuatable to rotate the lever 51 around the second rotation axis Y' in order to move the support casing 21 along the movement direction Z. More in detail, in operation when the user actuates the movement means 4, the actuator member 40 moves, by means of the first connection portion 52, the lever 51 to rotate around the second rotation axis Y', which in turn determines, by means of the second connection portion 53, the movement of the upper casing 21 along the movement direction Z.

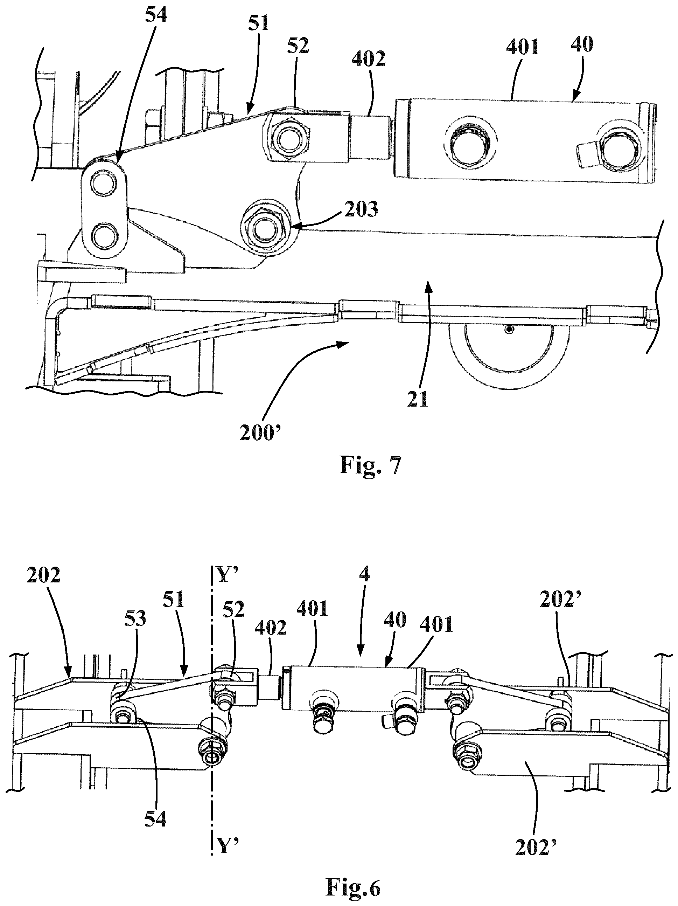

Advantageously, as illustrated in figure 7, the support frame 20 is provided with at least one connection bracket 202, which is preferably fixed to one between the front tube 201' and the rear tube 201" from which it is extended projecting above the upper casing 21. Pivoted at such connection bracket 202 is the lever 51, around its second rotation axis Y'.

In particular, the connection bracket 202 comprises two connection arms 202' which are spaced from each other along a direction parallel to the second rotation axis Y' and are connected to each other by means of a hinging pin 203 that is rotatable with respect to the aforesaid connection arms 202' around the second rotation axis Y'.

Advantageously, the lever 51 is placed between the two connection arms 202' and is provided with a first through hinging hole, which is engaged by the hinging pin 203 in order to mechanically and rotatably connect the lever 51 to the support frame 20 by means of the aforesaid connection arms 202'.

Advantageously, the second connection portion 53 of the lever 51 is mechanically connected to the upper casing 21 so as to be able to follow a curved trajectory during the rotation of the lever 51, in particular with a component orthogonal to the movement direction Z, and preferably parallel to the advancement direction X.

Preferably, the second connection portion 53 of the lever 51 is connected to the upper casing 21 by means of a connection rod 54 which has a first end hinged to the upper casing 21 and a second end hinged to the second connection portion 53 of the lever 51.

Of course, without departing from the protective scope of the present invention, the second connection portion 53 can be alternatively mounted on a linear guide made on the upper casing 21, so as to allow the movement of the second connection portion 53 following the rotation of the lever 51.

Advantageously, the actuator member 40 is of linear type and is hinged to the first connection portion 52 of the lever 51 by means of a connection pin.

Preferably, the actuator member 40 is provided with a female coupling element (e.g. a fork), while the first connection portion 52 is preferably a male coupling element insertable between two shoulders of the female coupling element and hinged thereto by means of a second pin.

Of course, it is possible to provide for a male-female reversal of such mechanical coupling without departing from the protective scope of the invention.

In accordance with the preferred embodiment, the linear actuator of the actuator member 40 is a hydraulic cylinder (preferably double-acting), provided with a jacket 401 and with a movable stem 402, mechanically connected to the first connection portion 52 and slidably associated with the jacket 401. More in detail, the movable stem 402 is actuatable for sliding in a guided manner with respect to the jacket 401, in particular by means of a hydraulic circuit, in order to move the lever 51 and consequently the upper casing 21 in the above-described mode, between the first position A and the second position B.

Of course, it is also possible to provide for a linear actuator actuatable by means of an electric or pneumatic motor, without departing from the protective scope of the present invention.

Advantageously, the movement means 4 comprise two motion transmission kinematic mechanisms 5, of the above-described type, which are connected to the upper casing 21 in two separate portions of the latter, in particular at the opposite sides 21', 21" of the upper casing 21 itself, preferably in proximity to the respective guide elements 41.

Preferably, each kinematic mechanism 5 comprises a corresponding aforesaid lever 51, which is pivoted to a corresponding connection bracket 202 fixed to the corresponding tube 201', 201" of the support frame 20.

Advantageously, the lever 51 of one of the motion transmission kinematic mechanisms 5 is connected (at its first connection portion 52) to the movable stem 402 of the actuator member 40, and the lever 51 of the other of the motion transmission kinematic mechanisms 5 is connected (at its first connection portion 52) to the jacket 401 of the actuator member 40 itself.

In operation, when the actuator member 40 is actuated to be extended, it determines the rotation of the levers 51 downward, so as to move the upper casing 21 towards the second position B (lowered). When the actuator member 40 is actuated to be retracted, it determines the rotation of the levers 51 upward, so as to move the upper casing 21 towards the first position A (raised).

Such particular configuration allows moving the upper casing 21 by acting on distinct portions of the upper casing 21 of the latter, in particular with the use of a single actuator member 40 per pair of motion transmission kinematic mechanisms 5. In this manner it is therefore possible to improve the precision and safety of movement of the upper casing 21, simultaneously reducing the mechanical components necessary for such movement.

Of course, without departing from the protective scope of the present patent, the motion transmission kinematic mechanism 5 can be of a type different from that of the above-described examples, and for example comprise a cam mechanism, crank rod, eccentric disc or another motion transmission mechanism that is suitable for such purpose.

In accordance with a further embodiment variant of the invention, not illustrated in the enclosed figures, the actuator member can have the jacket 401 mounted on the support frame and the movable stem 402 connected to the upper casing 21 (preferably by means of the motion transmission kinematic mechanism 5).

In accordance with a further embodiment variant, the actuator member 40 is configured for directly determining an actuation motion which is oriented along the movement direction Z. In such case, preferably, the movement means 4 do not comprise the aforesaid motion transmission kinematic mechanism 5 and the actuator member 40 is advantageously fixed to the support frame 20 by means of the jacket 401, while is advantageously fixed to the upper casing 21 by means of the movable stem 402.

Advantageously, the farming machine 1 is a bed-forming machine, which comprises forming means 6, fixed to the support structure 2, in particular to the support frame 20, at the rear opening 2", in order to receive the ground treated by the tool-holder rotor 3 and compact it, forming beds on which seeds and/or plants to be cultivated are intended to be planted.

More in detail, the forming means 6 comprise, in a per se conventional manner, a support plate 60, substantially L-shaped and provided with a horizontal leveling section 60', and such support plate 60 is rotatably connected to the support structure 2 and is movable, in particular by means of suitable actuators 61, in order to vary the height of the support plate 60, and in particular of the horizontal leveling section 60' with respect to the ground and allow adjusting the height of the beds formed.

Advantageously, the forming means 6 also comprise shaper elements 62, with triangular shape, which are fixed below the support plate 60, in particular at the horizontal leveling section 60'. More in detail, the shaper elements 62 are fixed with a base face thereof to the support plate 60, and are placed spaced from each other and aligned along a direction substantially parallel to the first rotation axis Y, so as to allow the formation of beds with trapezoidal shape, by virtue of the forced passage of the ground between the tilted sides of two adjacent shaper elements 62 and the horizontal leveling section 60' of the support plate 60.

In accordance with the aforesaid preferred embodiment, the farming machine 1 comprises two separate tool-holder rotors 3, each of which rotatably mounted on a distinct lateral wall 23 of the support frame 20 and at a central dividing wall, which is preferably fixed to the support frame 20 and is extended projecting on the lower part from the latter within the operative seat 200.

Preferably, the two tool-holder rotors 3 are kinematically connected to the common power takeoff present on the drive unit by means of distinct transmission members, e.g. of gear, chain or belt type, which are well-known to the man skilled in the art and therefore they will not be described hereinbelow.

Advantageously, the farming machine 1 comprises two separate upper casings 21, one for each tool-holder rotor 3, and two separate movement means 4, preferably independent from each other, configured in order to move the two separate upper casings 21 also in a different manner, for example depending on the tool-holder rotor 3 actuated.

Advantageously, the farming machine 1 comprises multiple movement means 4 of the above-described type, which are spaced from each other and substantially aligned along a direction substantially parallel to the first rotation axis Y, so as to allow a movement of the upper casing 21 that is as distributed and symmetric as possible.

The invention thus conceived therefore attains the pre-established objects.

## Claims

1. Farming machine for working the ground, which comprises:
- a support structure (2), arranged for advancing on the ground along an advancement direction (X) and comprising:
- a support frame (20); and
- an upper casing (21) mounted on said support frame (20) and delimiting, on the lower part, an operative seat (200);
- at least one tool-holder rotor (3), which is rotatably mounted on said support frame (20) around a first rotation axis (Y) intended to be substantially orthogonal to said advancement direction (X), is placed below said upper casing (21) in said operative seat (200), and is actuatable to rotate around said first rotation axis (Y) in order to turn over said ground;
said farming machine being **characterized in that** said upper casing (21) is movably mounted on said support frame (20), and that said farming machine (1) comprises movement means (4), mechanically connected to said upper casing (21) and to said support frame (20) and actuatable for moving said upper casing (21) at least between a first position (A), in which said upper casing (21) is spaced from said tool-holder rotor (3), and a second position (B), in which said upper casing (21) is brought close to tool-holder rotor (3).

2. Farming machine (1) according to claim 1, **characterized in that** said tool-holder rotor (3) delimits, in said operative seat, a passage volume (200'), which is placed above said tool-holder rotor (3) and in which part of said ground turned over by said tool-holder rotor (3) is susceptible of being accumulated;
with said upper casing (21) in said first position (A), said passage volume (200') having greater dimensions with respect to when said upper casing (21) is in said second position (A), in order to make difficult or prevent the accumulation of ground in said passage volume (200').

3. Farming machine (1) according to claim 1 or 2, **characterized in that** said upper casing (21) is slidably mounted on said support frame (20) and is movable along a movement direction (Z) substantially orthogonal to said advancement direction (X) and to said first rotation axis (Y) and preferably rectilinear.

4. Farming machine (1) according to claim 3, **characterized in that** said movement means (4) comprise:
- at least one slide guide (41) fixed to said support frame (20) and extended along said movement direction (Z);
- at least one guide element (42) constrained to said upper casing (21) and slidably engaged in said slide guide (41) in order to guide said upper casing (21) during its movement between said first position (A) and said second position (B) along said movement direction (Z).

5. Farming machine (1) according to claim 4, **characterized in that** said upper casing (21) is extended, according to said advancement direction (X), between two opposite sides (21', 23");
said movement means (4) comprising two said slide guides (41), each placed at a corresponding said side (21', 23") of said upper casing (21), and two said guide elements (42), preferably made in a single body, each of which provided with a corresponding guide edge (420) placed to slidably engage a corresponding said slide guide (41).

6. Farming machine (1) according to any one of the preceding claims, **characterized in that** said movement means (4) comprise at least one actuator member (40), actuatable for moving, in a controlled manner, said upper casing (21) between said first position (A) and said second position (B).

7. Farming machine (1) according to claim 6, **characterized in that** said actuator member (40) is of motorized type.

8. Farming machine (1) according to claim 7, **characterized in that** said movement means (4) comprise at least one motion transmission kinematic mechanism (5) placed as a connection between said actuator member (40) and said upper casing (21) and arranged for transforming an actuation motion imparted by said actuator member (40) into a linear motion parallel to said movement direction (Z).

9. Farming machine (1) according to claim 8, **characterized in that** said motion transmission kinematic mechanism (5) comprises at least one lever (51) which is pivoted to said support frame (20) and rotatable around a second rotation axis (Y'), and is provided with a first connection portion (52) mechanically connected to said actuator member (40) and with a second connection portion (53) mechanically connected to said upper casing (21);
said actuator member (40) being actuatable to rotate said lever (51) around said second rotation axis (Y') in order to move said support casing (21) along said movement direction (Z).

10. Farming machine (1) according to claim 9, **characterized in that** said actuator member (40) is of linear type and is hinged to the first connection portion (52) of said lever (51) by means of a connection pin.
